# EUROPEAN PATENT SPECIFICATION

(11) **EP 1 148 608 B1**
(45) Date of publication and mention of the grant of the patent: **13.01.2010**
(21) Application number: 01303439.2
(22) Date of filing: 12.04.2001
(51) Int. Cl.: H02H 7/28

(54) **Improvements in or relating to ring main units**
Verbesserungen in Ringleitungseinheiten
Améliorations dans des unités de réseau bouclé

(30) Priority: 18.04.2000 GB 0009416
(43) Date of publication of application: 24.10.2001
(73) Proprietor: AREVA T&D SAS, 92084 Paris La Défense Cedex (FR)
(72) Inventor: Gray, Martin, Hyde, Cheshire SK14 4QH (GB); Casey, John, Wildbrook Crescent, Oldham OL8 2NY (GB)
(74) Representative: Poulin, Gérard

(56) References cited:
- EP-A- 0 496 997
- GB-A- 2 198 001

## Description

### Field of the Invention

The present invention relates to the protection of local electricity supplies when faults occur in the connections (cable or overhead line) between the consumer, the local step-down transformer and the supply to the local ring main, the latter normally being a primary substation. In particular, the invention relates to a novel ring main unit.

### Background of the Invention

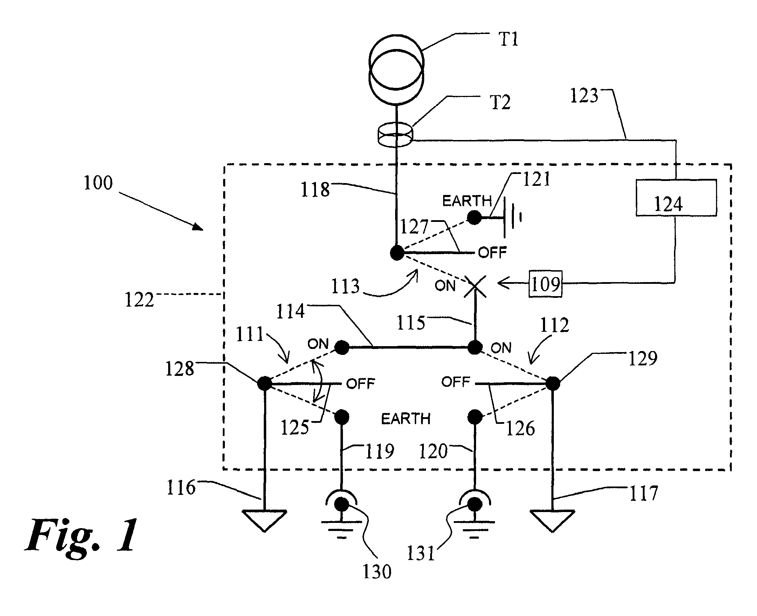

A known form of Ring Main Unit (RMU) is illustrated in Fig. 1 of the attached drawings, which shows only one phase of a 3 phase device, the same components being arranged in parallel for the other two phases. For each phase, the RMU 100 briefly comprises three moving contact switch or disconnector arrangements 111, 112, 113, a busbar or busbars 114, 115 to interconnect the ON positions of disconnectors 111-113, connections 116, 117 to the electrical ring main distribution cables or lines (not shown), a so-called "T-off" connection 118 to step-down distribution transformer T1, and earth connections 119 - 121. The T-off connection is so called because it forms the stem of a "T" shape with respect to the ring main. A current transformer T2 is provided in association with connection 118 to output a measure of the amount of current flowing to the transformer T1. The output of the current transformer T2 is linked via connection 123 to a controller 124 which triggers an actuator 109 for operation of the switch or disconnector 113 to isolate the faulty T-off circuit from the ring main when the current in connection 118 exceeds a certain value. An enclosure 122 is shown in dashed lines. Outdoors, the unit is preferably sealed and filled with a gas, such as SF₆ (sulphur hexafluoride gas).

As will be realised, the RMU 100 interfaces the step-down transformer T1, which supplies current to the consumer, with the local ring main electrical distribution system. The enclosure 122 may be metallic, such as sheet steel, and the RMU 100 may be mounted directly on or in the transformer T1, or it may be detached from the transformer and connected to it via a cable. Sometimes, the step-down transformer T1 is omitted from the T-off circuit and the connection 118 then feeds directly into other networks. Where the transformer T1 is present, it will supply a relatively low secondary voltage, e.g. 415V three-phase, but the primary distribution voltage will be much higher, e.g., 12kV; however, RMU's may be designed to accommodate a variety of system voltages and insulation mediums.

Respective contact arms 125, 126 of the disconnectors 111, 112 are pivotable about points 128, 129 between an ON position, as shown in dashed lines, when the arms 125, 126 connect with the ON contacts at opposing ends of busbar 114, an intermediate OFF position as shown, and an EARTH ON position, again shown in dashed lines, when the arms 125, 126 connect with earth contacts on earth connections 119, 120. When disconnectors 111, 112 are in the EARTH ON position, ring main cable test points 130, 131 can be accessed as indicated. Disconnectors 111, 112-commonly known as "ring switches" for their ring main related function - are so-called "fault-make/load-break" switches, i.e., they are sufficiently highly rated to allow closure to the ON position so as to "make" the ring circuit under fault current conditions, and they can also move away from the ON position to "break" the ring circuit under normal electrical load conditions.

The ring switch disconnectors 111, 112 will normally be manually operated to move them from the ON to the OFF position to interrupt the ring main circuit, or to move them from the OFF to the EARTH position to allow testing of the ring main cable or safe working on the cable at another position in the ring main. However, disconnectors 111, 112 can alternatively be remotely operated using motorised gear.

Disconnector 113 is more properly termed a circuit-breaker, commonly known as a "T-off switch", which supplies current to consumers from the ring main. The circuit-breaker function is represented by the "X" at the ON contact. The T-off switch disconnector 113 can be switched between the 'ON', 'OFF' and 'EARTH' positions and is shown in the OFF position, midway between EARTH and ON positions. To allow safe repair or maintenance work on the transformer T1, disconnector 113 has a limited "fault make" capacity when switching into the 'EARTH' position, typically 3.15kA r.m.s.

The current transformer T2 and controller 124 with actuator 109 operate T-off switch 113 to provide automatic protection to the other consumers on the ring main in the event that a fault occurs in the supply on the consumer side of the step-down transformer T1. Normally, arm 127. of T-off switch 113 is in the ON position and is latched in that position against the action of a spring. However, when controller 124 (which may, for example, be a programmable microprocessor-controlled relay) senses that the current in connection 18 has exceeded a predetermined value, it triggers actuator 109 to unlatch arm 127 and the spring rapidly switches it away from the ON position. Subsequent operation of the T-off switch is manual, to reconnect the T-off circuit to the ring main when the fault has cleared or been repaired.

A problem with the known type of RMU is that actuation of the ring switches is either manual, or occurs relatively slowly by remote control of motorised mechanisms, thus prolonging power interruptions to other consumers elsewhere on the ring main.

One object of the invention is therefore to provide ring switches which can rapidly restore the continuity of the ring main.

A ring main unit as defined in the preamble of claim 1 is known e.g. from GB-A-2198001. Further relevant prior art is disclosed in EP-A-0496997.

### Summary of the Invention

According to the present invention, a ring main unit is suggested as defined in claim 1.

Said control means conveniently includes:
(a) current sensor means for outputting a signal representative of a magnitude of current flowing to the T-off circuit, and
(b) threshold detection means responsive to said signal from said current sensor means to output said trigger signal whenever a current flowing to said T-off circuit exceeds said predetermined magnitude.

Conveniently, said control means outputs at least one further trigger signal to said further actuator means after said interrupter has been actuated from said closed position to said open position, said further actuator means being responsive to said at least one further trigger signal to sequentially actuate said T-off switch device and said interrupter as aforesaid.

Said current sensor may be a current transformer. Preferably, said threshold detection means comprises a programmable microprocessor-controlled relay.

For safety reasons, said further actuator means for sequentially actuating said T-off switch device from said closed state to said open state as aforesaid includes an interlock mechanism between said interrupter and said T-off switch device to prevent said T-off switch device being moved away from its on position while said interrupter is in its closed position.

To facilitate quick restoration of electricity supply through said ring main and said T-off circuit when transient faults occur in said T-off circuit, said actuator means may comprise an autorecloser mechanism linked to said T-off disconnector and said interlock mechanism, whereby movement of said T-off disconnector to its off position is allowed only before a last reclosing operation of said autorecloser mechanism, and after a predetermined number of reclosing operations of said autorecloser mechanism has indicated a persistent fault in said T-off circuit.

To allow use of the invention ring main unit as a convenient means of isolating faults in the ring main circuit as well as in the T-off circuit, the ring main unit may also be provided with servo-controlled actuator means for remotely opening and closing said interrupter, such remote opening and closing being independent of any actuation resulting from current in said T-off circuit exceeding said predetermined level.

Preferably, the interrupter comprises a vacuum interrupter, such as described in patent number GB 2 308 498.

In a further safety-related aspect, said ring switch disconnector is movable between a main position for continuity of the ring main and at least one alternative position which breaks continuity of the ring main, an interlock mechanism being provided between said interrupter and its associated disconnector to prevent the latter being moved away from its main position while said interrupter is in its closed position.

In a preferred arrangement, said ring main unit comprises two ring switch devices, each comprising a fault-make/fault-break interrupter in series with a ring main disconnector.

Preferably, said T-off switch device comprises at least a disconnector having on and off positions, or having on, off, and earth positions.

The invention also includes open ring main circuits and feeder sectionalised closed ring main circuits comprising at least one ring main unit as described above.

### Brief Description of the Drawings

Exemplary embodiments of the invention will now be described with reference to the accompanying drawings, in which:
Figure 1 schematically shows the layout of a known type of RMU;
Figure 2 schematically shows the layout of an RMU according to the present invention;
Figure 3 illustrates an operating sequence for the embodiment of Figure 2 when a fault occurs in the T-off circuit.
Figures 4 and 5 illustrate the use of RMU's like that of Figure 2 in open and closed ring main distribution systems respectively; and
Figure 6 schematically shows an alternative embodiment for an RMU according to the present invention.

### Detailed Description of the Preferred Embodiments

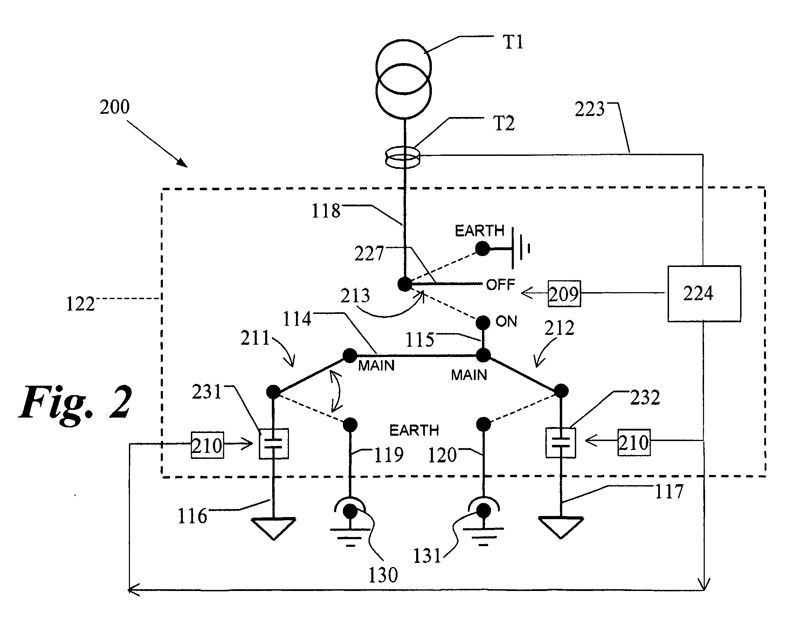

In Figures 2-6, where components in an RMU according to the invention are given the same reference numbers as components in the prior art RMU 100 in Figure 1, they are assumed to be similar and will not be further described.

It will therefore be noticed in Figure 2 that each ring switch comprises a disconnector 211, 212 in series with an associated vacuum interrupter 231, 232 to control current flow around the ring main. The vacuum interrupters are fully rated fault make/fault break devices, as known for example from patent number GB 2 308 498, and can be operated between on and off positions (open and closed). The designation "fault make/fault break" means that the interrupters have the ability to both make (close) and break (open) the circuit during electrical supply fault conditions. Disconnectors 211 and 212 differ from disconnectors 111, 112 in Figure 1 in that they only have two positions, "MAIN" and "EARTH", although three-position disconnectors, as shown in Figure 1, could be accommodated if required. Furthermore, due to the presence of interrupters 231, 232, the disconnectors can if desired be purely manual in operation, without even spring or pneumatic assistance, and therefore can be very simple. For safety reasons, each ring switch disconnector 211, 212 is connected to its respective vacuum interrupter 231, 232 via an interlock mechanism (not shown) to prevent movement of the disconnector away from its ON position if its associated vacuum interrupter is also in the closed ('ON') position. The interlock mechanism will not be further described because such mechanisms are well known in the prior art and the skilled designer can readily design one suitable for the present task.

The ring switch disconnectors 211, 212 will normally be manually operated to move them to the EARTH position to allow testing of the ring main cable or safe working on the cable at another position in the ring main. However, disconnectors 211, 212 could alternatively be remotely operated using motorised gear. The principle and practice of remote operation of such switches using servo-mechanisms is well known in the industry, and will therefore not be further described.

As in Figure 1, "T-off" disconnector 213 can be switched between the 'ON', 'OFF' and 'EARTH' positions. However, once again, the invention provides a well-known type of interlock mechanism to ensure that disconnector 213 can only be moved away from the 'ON' position when both ring switch vacuum interrupters 231, 232 are already in the 'OFF' (i.e. open) positions.

Although disconnector 213 is shown as having three positions, it is conceivable that a two-position disconnector could be utilised instead, the EARTH position either being eliminated, or being provided in a separate earth switch (not shown) located between disconnector 213 and connection 118.

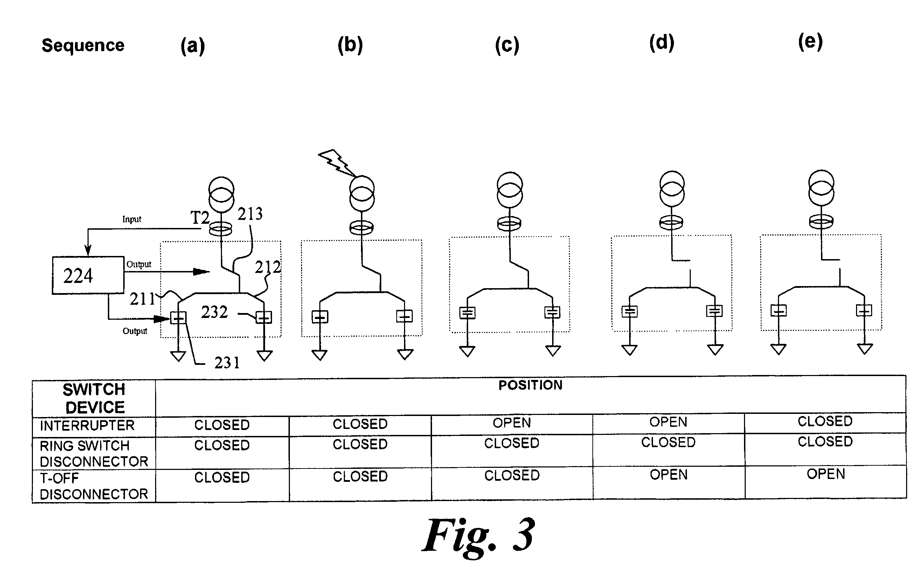

The RMU is enabled to act as an automatic protection system because the controller 224, which is connected to the output of the current transformer T2 or other current sensing device on each phase of the T-off circuit via connection 223, is connected not only to the actuator 209 which is associated with the T-off disconnector 213, but also to twin actuators 210 associated with vacuum interrupters 231, 232. If an excessive current is sensed in connection 218, certain actions occur in automatic sequence, as shown in Figure 3 :-
(a) Under normal operating conditions, the T-off switch disconnector 213, both ring switch disconnectors 211, 212, and both ring switch interrupters 231, 232 are in their closed or ON positions.
(b) A fault occurs in the T-off circuit, causing the current transformer T2 to output a larger current than normal.
(c) The controller 224 senses if the output current of transformer T2 exceeds a predetermined magnitude and if so triggers both actuators to trip both ring switch vacuum interrupters 231, 232 to the open position. This isolates the T-off circuit and interrupts the ring main.
(d) The T-off switch disconnector 213 is then automatically opened.
(e) The ring main interrupters 231, 232 are then automatically reclosed, restoring the ring main.

A variety of means can be used to accomplish this sequence of tripping open the vacuum interrupters, opening the disconnector 213 and reclosing the vacuum interrupters. For example, the controller 224 may comprise a threshold current detection circuit and a sequencing circuit (or mechanism) for outputting a sequence of signals when the threshold current is exceeded. The actuators 210, 209 conveniently comprise solenoid mechanisms for respectively actuating the moveable contacts of the two ring switch vacuum interrupters 231, 232 and the T-off disconnector 213 in response to the sequence of signals. Thus, the current signal from transformer T2 could be fed to a known type of programmable microprocessor-controlled relay capable of digitally implementing equivalents of the thresholding and sequencing functions and which is able to sequentially output:
(i) An "interrupter opening" trigger signal to respective solenoid mechanisms 210 associated with the vacuum interrupters 231, 232 to trigger simultaneous opening of the interrupters.
(ii) A "disconnector opening" trigger signal to a solenoid mechanism 209 associated with the disconnector 213, to trigger unlatching of the disconnector arm 227 so that it moves under spring action to the OFF position after the vacuum interrupters have opened.
(iii) An "interrupter closing signal" to the solenoid mechanisms 210 associated with the vacuum interrupters 231, 232 to trigger simultaneous closing of the interrupters after the disconnector 213 has moved to the OFF position. As an alternative to such an interrupter closing signal there could be a simple mechanical or electromechanical link between disconnector 213 and the interrupters 231, 232, whereby movement of disconnector 213 to the OFF position causes closing of the interrupters.

As an alternative to the use of a program-controlled relay, the output of the current sensor T2 could be input to a time limit fuse network, as well known in the industry, the output of the time limit fuse network being used to trigger electromechanical mechanisms to open and close the switches once only, in the sequence already described.

Regarding the use of solenoids or similar electromagnetic actuators, these can be used to release a spring-charged mechanism, which in turn urges the moveable contact of each vacuum interrupter away from (or towards) the fixed contact to establish the open circuit (or to re-establish the ring main circuit); alternatively, the moveable contact of each vacuum interrupter may be moved by direct linkage to an electromagnetic actuator.

A "once-only" open and close cycle of the ring switch interrupters 231, 232, as described in relation to Figure 3, allows the ring main to continue to supply other consumers without appreciable interruption of the supply, while the fault in the T-off circuit is investigated. However, many such faults are of transient nature, and it is therefore an advantage if the interrupters 231, 232 are linked to an autorecloser mechanism (such mechanisms being well known in themselves), thereby making the RMU as a whole effective as an autorecloser for the T-off circuit. In this case, the safety interlock mechanism between the vacuum interrupters 231, 232 and disconnector 213 does not allow the disconnector to move to the OFF position until the interrupters have gone through a predetermined number of open and close cycles to allow possible transient faults to clear.

Referring again to Figure 2, a possible sequence of events in an autoreclosing RMU would be:-
(a) the transformer T2 senses a fault current in the T-off circuit;
(b) the controller 224 thresholds the output of transformer T2 and uses the resulting signal to actuate an internal relay which energises the solenoid release coils of the two stored energy recloser mechanisms 210;
(c) the recloser mechanism acts on the moveable contacts of the vacuum interrupters 231, 232, so tripping them to the open position;
(d) when interrupters 231, 232 reach the open position, the stored energy mechanism referred to in (b) and (c) is reversed to reclose the interrupters 231, 232 and restore the ring main circuit;
(e) while controller 224 is still sensing an overcurrent signal from transformer T2, the solenoid is maintained in the energised condition and consequently the recloser mechanism cycles between the closed and open positions of the interrupters 231, 232;
(f) after a predetermined number of cycles of the autorecloser mechanism, which number is normally sufficient to allow a temporary fault in the T-off circuit to clear, a final transition of the recloser mechanism to the open position of the vacuum interrupters releases the safety interlock mechanism between the interrupters 231, 232 and disconnector 213, whereupon disconnector 213 is spring-urged to the OFF position;
(g) the recloser mechanism closes the interrupters, so restoring the ring main circuit;
(h) maintenance personnel can then attend to the fault in the T-off circuit after manually turning disconnector 213 to the EARTH position as a safety precaution.

A typical rating for the unit described above could be:-

| | |
|---|---|
| Continuous current: | 630A |
| Short circuit rating: | 20kA |
| System voltage: | 12kV |

These values are quoted as being typical of those used in medium voltage distribution systems. However, higher or lower ratings could be accommodated.

Note that the invention RMU is also applicable to arrangements in which the step-down transformer is omitted and the T-off circuit feeds directly into another network.

An RMU incorporating the invention has been described without reference to any particular type of ring main electricity distribution system; however, the invention may be used, for example, in both open ring and closed ring (feeder sectionalised) electricity distribution systems.

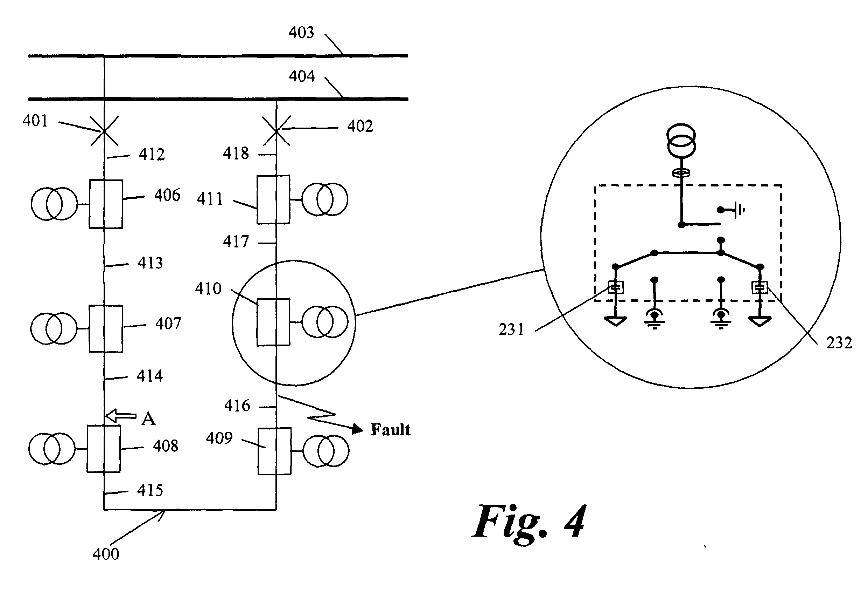

Figure 4 shows use of RMU's in accordance with the invention in an open ring main electricity distribution system. The ring main 400 is supplied by two circuit breakers 401, 402 connected to busbars 403 and 404, respectively, which may or may not be in the same primary substation. In this example six RMU's 406 to 411 are shown distributed around the ring 400 and connected by cables 412 to 418. In a typical prior art open ring system, one RMU near the mid-point of the ring would have one of its ring switches 111, 112 (Figure 1) in the open position. If we now assume that invention RMU's have replaced the prior art RMU's and that RMU 408 is the one whose ring switch should be in the open position, this is accomplished by arranging that one of the vacuum interrupters, say 232, is in the open position, the associated disconnector 211 remaining in the closed position. Since the vacuum interrupter 232 is connected to cable 414, the open point in the ring main is indicated by the arrow A.

If a fault or overload were to occur in one of the T-off circuits fed by the RMU's 406 to 411, both the vacuum interrupters 231, 232 in that one RMU would open immediately, followed by opening of the T-off disconnector 213 and immediate reclosing of the vacuum interrupters to restore the ring main. This could cause a momentary interruption of supply to some consumers on the ring. As already explained, the RMU's on the ring can be supplied with reclosing mechanisms to allow temporary faults in the T-off circuit to clear before the supply to the consumers on the T-off circuit is cut off for repair of more serious faults.

On the other hand, if a fault were to occur in cable 416, as indicated by the zig-zag arrow, the circuit breaker 402 would open, so removing the supply from RMU's 408-411 but leaving RMU's 406, 407 live. Following opening of circuit breaker 402 and subsequent location of the fault in cable 416, the system must be switched to restore supply to the maximum number of consumers and isolate the fault. The ring switch vacuum interrupters in the RMU's can be used for this instead of the ring switch disconnectors, and a suggested switching sequence comprises:
(a) Open the vacuum interrupter 232 (Figure 2) connecting cable 416 in RMU 410.
(b) Close the circuit breaker 402, so restoring the supply to RMU's 410, 411.
(c) Open the vacuum interrupter 231 in RMU 409 connected to cable 416, so isolating the fault.
(d) Close the vacuum interrupter 231 in RMU 408, so connecting cable 415 and restoring supply to RMU's 408, 409.
(e) Finally, before work is commenced on cable 416 to rectify the fault, earth the cable at both ends by switching disconnectors 211 and 212 in RMU's 409, 410, respectively, to their EARTH positions.

If desired, steps (a) to (d) could be accomplished by visiting the locations of the RMU's and manually opening and closing the vacuum interrupter contacts, the moveable contacts of the interrupters being connected to suitable actuation mechanisms. Alternatively, steps (a) to (d) could be manually instructed from a remote station using radio telemetry control of servo-mechanisms. It should be noted that the present invention has particular utility in this respect, because whereas motorised gear is conventionally used to move contact arms and the like, the moveable contacts of the vacuum interrupters 231, 232 can be readily opened and closed using simple solenoid mechanisms, which are not only cheaper, but also act more rapidly. The steps (a) to (d) could even be fully automated using a system which could logically deduce and execute the required operation sequence from overcurrent information in the ring main cables. In any case, compared with the embodiment of Figure 2, each interrupter 231, 232 would require individual actuation, independently of actuation triggered by sensing of an overcurrent in the T-off circuit, to open and close its contacts in accordance with the suggested sequence.

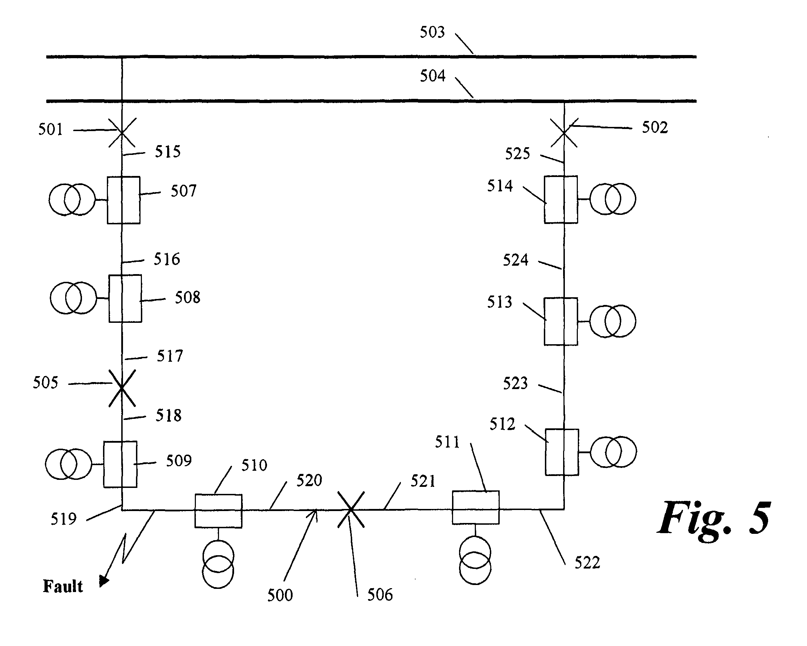

When used in closed ring distribution systems, the unique unit configuration of the invention allows the functionality of an open point system with the advantages offered by a closed ring. Figure 5 illustrates use of the invention in a closed ring. The ring main 500 is supplied by two circuit breakers 501, 502 connected to busbars 503 and 504, respectively, which may or may not be in the same primary substation. As would also be the case in a closed ring system fitted with prior art RMU's, two further circuit breakers 505, 506 are also inserted in the ring, so splitting it into three zones or sections. More zones could be created if desired by inserting more circuit breakers. The advantage of such a sectionalised closed ring system is that fewer customers lose their supplies in the event of a cable fault in the ring. In this example, eight RMU's 507 to 515 are shown distributed around the ring 500 and connected by cables 515 to 525. In a closed ring system, as the name indicates, all the circuit breakers and the ring switches would normally be in the closed position.

As in the case of the open ring system, a fault or overload occurring in one of the T-off circuits fed by one of the invention RMU's 507 to 514, would cause both vacuum interrupters 231, 232 in that one RMU to open immediately, followed by opening of the T-off disconnector 213 and immediate reclosing of the vacuum interrupters to restore the ring main 500. This would cause customers supplied by the faulty T-off circuit to lose supply, but would cause at most only a momentary interruption of supply to other consumers on the ring. As was the case for the open ring system, the RMU's on the closed ring can be also supplied with reclosing mechanisms to allow temporary faults in the T-off circuit to clear before the supply to the consumers on the T-off circuit is cut off for repair of more serious faults.

If a cable fault were to occur on cable 519, as indicated, circuit breakers 505 and 506 would automatically open, thus isolating RMU's 509 and 510 from the supply, the other RMU's remaining live. The faulty section of cable 519 could be isolated by individually opening the vacuum interrupters 231 and 232 in RMU's 509, 510 respectively and the circuit breakers 505 and 506 could then be safely closed, thereby restoring the supply to all consumers while cable repairs are undertaken.

Although the discussion with respect to Figures 4 and 5 assumes that all the RMU's are constructed in accordance with the embodiment of Figures 2 and 3, it is important to realise that invention RMU's can be mixed with conventional RMU's on the same ring system. This has cost advantages, in that existing RMU's can be replaced by invention RMU's as the old RMU's wear out, rather than replacing all RMU's simultaneously.

Again with respect to Figure 5, it is important to realise that the vacuum interrupters 231, 232 in some or all of the RMU's could readily be solenoid-actuated independently of each other in response to overcurrents in the ring cables and by radio telemetry signals from a remote station, as well as simultaneously with each other in response to the detection of overcurrents in the T-off circuit. In such a case, the circuit breakers shown in Figure 5 could be dispensed with, since by installing a selected number of invention RMU's whose vacuum interrupters 231, 232 can be independently actuated, it is possible to effect a graded protection system in which a ring main is split into as many sections as desired. The number of such RMU's to be installed on an existing ring main system to replace prior art RMU's, would have to be balanced against the number of sections to be created and the extra cost of the RMU's having independently actuated vacuum interrupters. Note that several graded protection systems are commercially available which may be applied to feeder sectionalised systems and which could include the RMU's of the present invention.

Normally, in feeder sectionalised closed ring distribution systems, consumers in that section of the ring main in which a more than transient fault occurs will lose their supply, due to opening of the primary circuit breakers feeding that section of the ring. However, the invention makes possible fully protected distribution systems at a more economic cost than existing systems, since an invention RMU whose vacuum interrupters 231, 232 are also fully automated for independent actuation, both by opening in response to fault currents in the ring main cables to which they are connected, and by opening and closing in response to telemetry signals, would be significantly cheaper than a functionally comparable known unit, such as a three-panel circuit breaker switchboard. Using the invention RMU's with independently actuated vacuum interrupters to split the ring main into its smallest component sections would produce a system in which a cable fault in any section of the ring would not result in loss of supply to any consumers on the ring, because the primary circuit breakers would not open.

For such fully automated distribution systems, whether closed or open ring, the invention will allow automation of the ring switches to be achieved without the use of motorised switchgear by enabling the electromagnetic actuation of autorecloser mechanisms operated by stored mechanical energy (e.g. springs). As mentioned previously, this could be a simple solenoid release coil acting on a spring-loaded mechanism, the mechanism storing sufficient spring energy to give several operations. Furthermore, use of stored electrical energy to power a solenoid rather than an electric motor allows the use of smaller capacity batteries and achieves quicker response times compared to motor actuated switchgear.

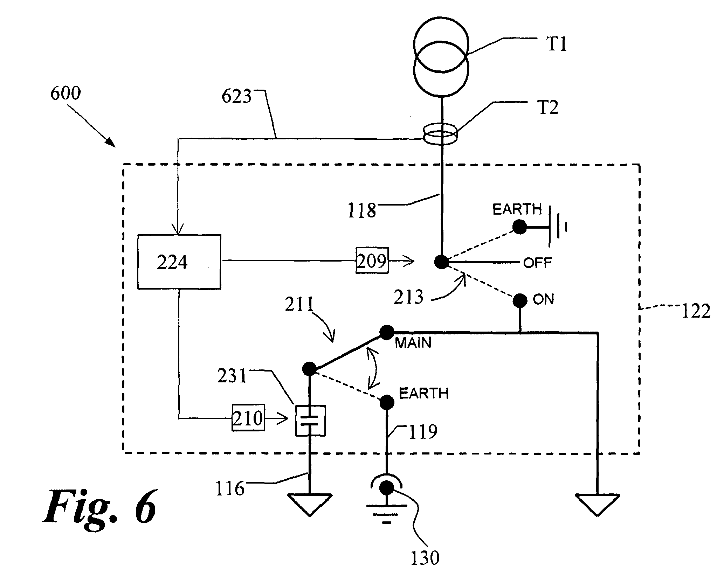

Figure 6 shows an alternative, more economical embodiment of the invention. Components which are the same or similar to those shown in Figure 2 are given the same references. It will be seen that the sole significant difference between the two embodiments is that the RMU of Figure 6 has only one ring switch, but that as described in relation to Figure 2, this ring switch comprises a fault make/fault break vacuum interrupter 231 in series with a two-position manual disconnector 211. Compared with the Figure 2 embodiment, the Figure 6 embodiment would give a reduced level of security of supply to consumers which may nevertheless be adequate in many cases.

## Claims

1. A ring main unit (200) for use in a local ring main electricity supply circuit, comprising a T-off switch device (213) for serving a T-off circuit and at least two ring switch devices (211/231, 212/232) for connecting said ring main to said T-off circuit, each ring switch device comprising a fault-make/fault-break interrupter (231, 232) having closed and open positions, the ring main unit further comprising:
- control means (224) for outputting a trigger signal when a current in said T-off circuit exceeds a predetermined magnitude indicative of a fault in said T-off circuit, and
- actuator means (210) responsive to said trigger signal for actuating said interrupter from said closed position to said open position,
**characterized in that** each ring switch device further comprises a disconnector (211, 212) in series with said interrupter and further actuator means (209) for sequentially:
- actuating said T-off switch device (213) from a closed state to an open state after actuation of said interrupters (231,232) from said closed state to said open state, and
- actuating said interrupters from said open state to said closed state upon actuation of said T-off switch device from said closed state to said open state.

2. A ring main unit according to claim 1, in which said control means includes:
- current sensor means (T2) for outputting a signal representative of a magnitude of current flowing to the T-off circuit, and
- threshold detection means (224) responsive to said signal from said current sensor means to output said trigger signal whenever a current flowing to said T-off circuit exceeds said predetermined magnitude.

3. A ring main unit according to claim 1 or claim 2, in which said control means outputs at least one further trigger signal to said further actuator means after said interrupter has been actuated from said closed position to said open position, said further actuator means being responsive to said at least one further trigger signal to sequentially actuate said T-off switch device and said interrupter.

4. A ring main unit according to claim 2 or claim 3, said current sensor being a current transformer.

5. A ring main unit according to any preceding claim, said threshold detection means comprising a programmable microprocessor-controlled relay.

6. A ring main unit according to any preceding claim, said further actuator means for sequentially actuating said T-off switch device from said closed state to said open state upon actuation of said interrupter from said closed state to said open state includes a safety interlock mechanism between said interrupter and said T-off switch device to prevent said T-off switch device being moved away from its on position while said interrupter is in its closed position.

7. A ring main unit according to any preceding claim, in which said actuator means comprises an autorecloser mechanism linked to said T-off disconnector and said interlock mechanism, whereby movement of said T-off disconnector to its off position is allowed only before a last reclosing operation of said autorecloser mechanism, and after a predetermined number of reclosing operations of said autorecloser mechanism has indicated a persistent fault in said T-off circuit.

8. A ring main unit according to any preceding claim, having servo-controlled actuator means for remotely opening and closing said interrupter, such remote opening and closing being independent of any actuation resulting from current in said T-off circuit exceeding said predetermined level.

9. A ring main unit according to any preceding claim, in which the interrupter comprises a vacuum interrupter.

10. A ring main unit according to any preceding claim, in which said ring switch disconnector is movable between a main position for continuity of the ring main and at least one alternative position which breaks continuity of the ring main, an interlock mechanism being provided between said interrupter and its associated disconnector to prevent the latter being moved away from its main position while said interrupter is in its closed position.

11. A ring main unit according to any preceding claim, in which said T-off switch device comprises at least a disconnector having on and off positions, or having on, off, and earth positions.

## Patentansprüche

1. Ringleitungseinheit (200) zur Verwendung in einer lokalen Ringleitung zur elektrischen Stromzufuhr eines Schaltkreise, umfassend eine T-Ausschalter-Einrichtung (213) freien T-Auschaltkreis und wenigstens Ringschalter-Einrichtungen (211/231, 212 / 232) zum Anschließen der Ringleitung an den T-Ausschaltkreis, wobei jede Ringschalter-Einrichtung ein Strungsverursacher / Strungsunterbrecher (231, 232) mit geschlossenen und offenen Stellungen aufweist und die Ringleitungseinheit des weiteren umfaßt:
eine Steuereinrichtung (224) zum Aussenden eines Schaltsignals, sobald ein Strom in dem T-Ausschaltkreis eine bestimmte Höhe übersteigt, die eine Strung in dem T-Ausschaltkreis anzeigt,
und eine Antriebsvorrichtung (210), die auf das Schaltsignal anspricht, um den besagten Unterbrecher aus der geschlossenen Stellung in die offene Stellung zu schalten,
**dadurch gekennzeichnet, daß** jede Ringschalt-Vorrichtung des weiteren einen Trenner (211, 212) aufweist, der mit dem Unterbrecher in Reihe liegt, sowie eine weitere Antriebsvorrichtung (209), die aufeinanderfolgend bewirkt,
daß die T-Ausschalt-Vorrichtung (213) von einem geschlossenen Zustand in einen offenen Zustand überführt wird, nachdem die Unterbrecher (231, 232) aus dem geschlossenen Zustand in den offenen Zustand gebracht worden sind,
und die des weiteren bewirkt, daß die Unterbrecher aus dem offenen Zustand in den geschlossenen Zustand gebracht werden, wenn die T-Ausschalt-Vorrichtung befätigt wird, so daß sie aus dem geschlossenen Zustand in den offenen Zustand kommt.

2. Ringleitungseinheit nach Anspruch 1, **dadurch gekennzeichnet, daß** die Steuervorrichtung eine Stromsensor-Einrichtung (T2) zur Abgabe eines Signals aufweist, das für die Starke eines Strom repräsentativ ist, der zu dem T-Ausschaltkreis fließt, und daß eine Schwellenansprech-Einrichtung (224) vorhanden ist, die auf das von der Stromsensor-Vorrichtung kommende Signal anspricht, um das Schaltsignal immer dann auszusenden, wenn ein Strom zu der T-Ausschalt-Einrichtung fließt, der die vorgegebene Höheübersteigt.

3. Ringleitungseinheit nach Anspruch 1 oder 2, **dadurch gekennzeichnet, daß** die Steuervorrichtung wenigstens ein weiteres Schaltsignal an die weitere Antriebseinrichtung abgibt, nachdem der Unterbrecher aus der geschlossenen Stellung in die offene Stellung betätigt worden ist, wobei die weitere Antriebsvorrichtung auf das wenigstens eine weitere Schaltsignal anspricht, um aufeinanderfolgend die T-Ausschalt-Einrichtung und den Unterbrecher zu betätigen.

4. Ringleitungseinheit nach Anspruch 2 oder 3, **dadurch gekennzeichnet, daß** der Stromsensor ein Stromumformer ist.

5. Ringleitungseinheit nach einem der vorhergehenden Ansprüche, **dadurch gekennzeichnet, daß** die Schwellenansprech-Einrichtung ein programmierbares, mikroprozessorgesteuertes Relais aufweist.

6. Ringleitungseinheit nach einem der vorhergehenden Ansprüche, **dadurch gekennzeichnet, daß** die weitere Antriebs-Vorrichtung zur aufeinanderfolgenden Betätigung der T-Ausschalt-Einrichtung aus dem geschlossenen Zustand in den offenen Zustand beim Betätigen des Unterbrechers aus dem geschlossenen Zustand in den offenen Zustand einen Sicherheits-Verriegelungs-Mechanismus zwischen dem Unterbrecher und der T-Ausschalt-Einrichtung aufweist, mit dem verhindert wird, daß die T-Ausschalt-Einrichtung aus ihrer Einschaltstellung bewegt wird, während sich der Unterbrecher in seiner geschlossenen Stellung befindet.

7. Ringleitungseinheit nach einem der vorhergehenden Ansprüche, **dadurch gekennzeichnet, daß** die Antriebs-Vorrichtung einen automatischen Wiederschließ-Mechanismus aufweist, der mit dem T-Ausschalter und dem Sicherheits-Verriegelungs-Mechanismus verbunden ist, wodurch die Bewegung des T-Ausschalters in seine Aus-Stellung vor wenigstens dem Wiederschließ-Vorgang des automatischen Wiederschließ Mechanismus möglich ist und nachdem eine vorbestimmte Anzahl von Wiederschließ-Vorgängen des automatischen Wiederschließ-Mechanismus einen fortdauernden Fehler in dem T-Ausschaltkreis angezeigt hat.

8. Ringleitungseinheit nach einem der vorhergehenden Ansprüche, **dadurch gekennzeichnet, daß** eine servo-gesteuerte Antriebs-Vorrichtung zum Ferröffnen und Fernschließen des Unterbrechers vorhanden ist, wobei ein derartiges Ferröffnen und -schließen unabhängig von jeglicher Betätigung ist, die sich auch daraus ergibt, daß der Strom in dem T-Auschaltkreis eine vorbestimmte Höhe übersteigt.

9. Ringleitungseinheit nach einem der vorhergehenden Ansprüche, **dadurch gekennzeichnet, daß** der Unterbrecher ein Unterdruck-Unterbrecher ist.

10. Ringleitungseinheit nach einem der vorhergehenden Ansprüche, **dadurch gekennzeichnet, daß** der Ringschaltungs-Unterbrecher zwischen einer Hauptstellung, die die Kontinuität der Ringleitung beinhaltet, und wenigstens einer alternativen Stellung beweglich ist, die die Kontinuität der Ringleitung unterbricht, und daß ein Verriegelungs-Mechanismus zwischen dem Unterbrecher und seinem zugehörigen Trenner vorgesehen ist, um zu verhindern, daß letzterer aus seiner Hauptstellung weg bewegt wird, während der Unterbrecher sich in seiner geschlossenen Stellung befindet.

11. Ringleitungseinheit nach einem der vorhergehenden Ansprüche, **dadurch gekennzeichnet, daß** die T-Ausschalt-Einrichtung wenigstens einen Trenner aufweist, der mit Einschalt- und Ausschalt-Stellungen versehen ist oder Einschalt-, Ausschalt- und Erd-Stellungen aufweist.

## Revendications

1. Unité de distribution en anneau (200) pour une utilisation dans un circuit d'alimentation électrique de distribution en anneau local, comprenant un dispositif de disjonction en T (213) pour servir un disjoncteur en T et au moins deux dispositifs de commutation d'anneau (211/231, 212/232) pour connecter ladite distribution en anneau audit disjoncteur en T, chaque dispositif de commutation d'anneau comprenant un interrupteur de mise en défaut/coupure en défaut (231, 232) ayant des positions fermée et ouverte, l'unité de distribution en anneau comprenait en outre :
- des moyens de commande (224) pour appliquer un signal de déclenchement lorsqu'un courant dans ledit disjoncteur en T dépasse une amplitude prédéterminé indicative d'un défaut dans ledit disjoncteur en T, et
- des moyens formant actionneur (210) réagissant audit signal de déclenchement pour actionner ledit interrupteur de ladite position fermée vers ladite position ouverte,
**caractérisée en ce que** chaque dispositif de commutation d'anneau comprend en outre un sectionneur (211, 212) en série avec ledit interrupteur et d'autres moyens formant actionneur (209) pour séquentiellement :
- actionner ledit dispositif de disjonction en T (213) d'un état fermé vers un état ouvert après l'actionnement desdits interrupteurs (231, 232) dudit état fermé vers ledit état ouvert, et
- actionner lesdits interrupteurs dudit état ouvert vers ledit état fermé lors de l'actionnement dudit dispositif de disjonction en T dudit état fermé vers ledit état ouvert.

2. Unité de distribution en anneau selon la revendication 1, dans laquelle lesdits moyens de commande comprennent :
- des moyens formant capteur de courant (T2) pour délivrer un signal représentatif d'une amplitude du courant circulant vers le disjoncteur en T, et
- des moyens de détection de seuil (224) sensibles audit signal provenant desdits moyens formant capteur de courant pour délivrer ledit signal de déclenchement à chaque fois qu'un courant circulant vers ledit disjoncteur en T dépasse ladite amplitude prédéterminée.

3. Unité de distribution en anneau selon la revendication 1 ou la revendication 2, dans laquelle lesdits moyens de commande délivrent au moins un autre signal de déclenchement audits autres moyens formant actionneur après que ledit interrupteur a été actionné de ladite position fermée vers ladite position ouverte, lesdits autres moyens formant actionneur étant sensibles audit au moins une autre signal de déclenchement pour actionner séquentiellement ledit dispositif de disjonction en T et ledit interrupteur.

4. Unité de distribution en anneau selon la revendication 2 ou la revendication 3, ledit capteur de courant étant un transformateur de courant.

5. Unité de distribution en anneau selon l'une quelconque des revendications précédentes, lesdits moyens de détection de seuil comprenant un relais commandé par un microprocesseur programmable.

6. Unité de distribution en anneau selon l'une quelconque des revendications précédentes, lesdits autres moyens format actionneur pour actionner séquentiellement ledit dispositif de disjonction en T dudit état fermé vers ledit état ouvert lors de l'actionnement dudit interrupteur dudit état fermé vers ledit état ouvert comprenant un mécanisme de verrouillage de sécurité entre ledit interrupteur et ledit dispositif de disjonction en T pour éviter que ledit dispositif de disjonction en T ne s'éloigne de sa position active alors que ledit interrupteur est dans sa position fermée.

7. Unité de distribution en anneau selon l'une quelconque des revendications précédentes, dans laquelle lesdits moyens formant actionneur comprennent un mécanisme d'auto-réenclenchement lié audit disjoncteur en T et audit mécanisme de verrouillage, moyennant quoi un déplacement dudit disjoncteur en T vers sa position inactive n'est autorisé qu'avant une dernière opération de réenclenchement dudit un mécanisme d'auto-réenclenchement, et qu'aprés qu'un nombre prédéterminé d'opérations de réenclenchement dudit mécanisme d'auto-réenclenchement a indiqué un défaut persistant dans ledit disjoncteur en T.

8. Unité de distribution en anneau selon l'une quelconque des revendications précédentes comportant des moyens formant actionneur asservi pour ouvrir et fermer à distance ledit interrupteur, cette ouverture et cette fermeture à distance étant indépendantes de tout actionnement résultat d'un courant dans ledit disjoncteur en T dépassant ledit niveau prédéterminé.

9. Unité de distribution en anneau selon l'une quelconque des revendications précédentes, dans laquelle l'interrupteur comprend un interrupteur sous vide.

10. Unité de distribution en anneau selon l'une quelconque des revendications précédentes, dans laquelle ledit disjoncteur d'anneau peut se déplacer entre une position de distribution pour assurer la continuité de la distribution en anneau et au moins une autre position qui interrompt la continuité de la distribution en anneau, un mécanisme de verrouillage étant prévu entre ledit interrupteur et son sectionneur associé pour éviter que ce dernier ne s'éloigne de sa position de distribution alors que ledit interrupteur est dans sa position fermée.

11. Unité de distribution en anneau selon l'une quelconque des revendications précédentes, dans laquelle ledit dispositif de disjonction en T comprend au moins un sectionneur ayant des position active et inactive, ou ayant des positions active, inactive et de terre.
